# FASCICULE DE BREVET EUROPEEN

(11) **EP 0 635 715 B1**
(45) Date de publication et mention de la délivrance du brevet: **15.04.1998**
(21) Numéro de dépôt: 94401638.5
(22) Date de dépôt: 13.07.1994
(51) Int. Cl.: G01N 21/05

(54) **Système destiné à créer une même pression instantanée entre deux cuves**
Vorrichtung zur Erreichtung eines gleichen Momentandrucks zwischen zwei Gefässen
Arrangement for the obtention of an equal instantaneous pressure between two vessels

(30) Priorité: 19.07.1993 FR 9308935
(43) Date de publication de la demande: 25.01.1995
(73) Titulaire: INSTITUT FRANCAIS DU PETROLE, 92506 Rueil-Malmaison (FR); Couillard, François, F-56450 Noyalo (FR)
(72) Inventeur: Couillard, François, F-91330 Yerres (FR); Frot, Didier, F-94600 Choisy le Roi (FR)

(56) Documents cités:
- EP-A- 0 239 487
- FR-A- 1 322 957
- DATABASE WPI Week 8601, 21 Janvier 1986 Derwent Publications Ltd., London, GB; AN 86-005127 & SU-A-1 160 285

## Description

La présente invention concerne le domaine de l'analyse des milieux par l'intermédiaire de certaines de leurs propriétés physiques.

Plus précisément, l'invention a trait au domaine de la mesure des indices de réfraction de plusieurs milieux.

Elle est également applicable à la photométrie ou à la spectrophotométrie.

Dans ces différents domaines, les détecteurs utilisés sont couramment constitués par au moins deux cuves ; l'une dite de référence renferme un milieu "témoin" parfaitement identifié, tandis que dans l'autre cuve circule un milieu (généralement liquide) dont certaines propriétés varient en fonction de sa composition, et que l'on souhaite analyser.

Les chromatographes en phase liquide à hautes performances utilisent le plus souvent ces types de détecteurs, qu'ils soient photométriques, réfractométriques ou spectrophotométriques.

Les photomètres présentent les avantages d'une haute sensibilité et d'une grande stabilité. Ils sont utilisables dans tous les cas où les éluats à détecter absorbent la lumière dans la gamme des longueurs d'onde comprises entre 190 et 700 nm environ. Mais ces photomètres présentent des inconvénients majeurs : ils ne sont pas universels et dans une même analyse, on peut rencontrer des éluats qui absorbent la lumière à des longueurs d'onde différentes ou qui même ne l'absorbent pratiquement pas, ce qui notamment en chromatographie préparative peut présenter l'inconvénient de laisser passer inaperçues des impuretés.

Qui plus est, dans le cas de la chromatographie préparative, le photomètre est rapidement saturé vers une densité optique de l'ordre de deux.

En divisant par exemple par dix la longueur du chemin optique dans la cuve, on diminue cet inconvénient, mais en perdant plus encore sur la sensibilité.

Quant aux réfractomètres, ils présentent l'avantage essentiel d'être pratiquement universels. La plupart des appareils actuellement commercialisés sont à déviation de faisceaux lumineux par double cuve prismatique à circulation. Dans ces détecteurs, une source lumineuse projette un faisceau sur un double photodétecteur après avoir traversé successivement un diaphragme, d'éventuelles lentilles de concentration, une lame de verre tournante à faces parallèles pour ajuster le zéro optique de l'appareil, c'est-à-dire pour équilibrer l'intensité lumineuse éclairant les deux photodétecteurs, une double cuve prismatique l'une pour un liquide de référence, l'autre pour la phase à analyser.

Lorsque l'indice de réfraction de cette dernière varie, la section prismatique des deux cuves successives est telle que le faisceau dévie d'un photodétecteur vers l'autre, selon le signe de la différence des indices entre les deux cuves. Or dans certains cas, notamment en chromatographie préparative, où l'on peut rencontrer des concentrations élevées dans l'une des deux cuves, ou si l'on crée un gradient d'élution, les variations d'indices peuvent être telles que le faisceau peut dévier jusqu'à saturation de l'instrument, c'est-à-dire que le faisceau dévié n'éclaire plus qu'une seule des deux cellules. Ainsi le chromatogramme se trouve écrêté et plusieurs pics à base commune peuvent se trouver non distingués.

Comme pour les photomètres, on peut réduire ces inconvénients en diminuant les déviations, mais ceci au prix, ici encore, d'une perte sur la sensibilité. On évite alors la saturation mais on ne distingue plus les petits pics, c'est-à-dire les impuretés, quand on est en chromatographie préparative.

On a également proposé un système réfractométrique à source monochromatique dont le faisceau est divisé pour traverser deux cuves en parallèle, pour un liquide de référence et la phase à analyser, puis les deux faisceaux sont rassemblés pour éclairer un photodétecteur. Des interférences se produisent du fait de la variation du chemin optique, côté mesure, en fonction de la variation de l'indice. On peut considérer que la sinusoïde suivie par l'intensité est linéaire au voisinage de la différence d'indice.

On connaît également, par le document FR-2.596.526 un réfractomètre différentiel interférentiel dont chacune des cuves, de référence et de mesure, participe indépendamment l'une de l'autre à deux systèmes d'interféromètres indépendants, mais "alimentés" en lumière par la même source (laser par exemple).

La détection photométrique des deux interféromètres est réalisée par deux photodétecteurs indépendants. On comprend que dans un tel système, chaque photodétecteur reçoit une intensité lumineuse qui est une fonction sinusoïdale de la différence des indices de réfraction entre les cuves de référence et de mesure.

En conséquence, si dans l'une des cuves l'indice de réfraction varie progressivement dans des proportions très grandes, par exemple en gradient, le photodétecteur correspondant reçoit une intensité lumineuse à variation sinusoïdale, ce qui signifie que l'on dispose d'une information de phase entre la mesure et la référence qui seront fonction, à 2k Π près, de la différence d'indice de réfraction entre les deux cuves.

Si cette différence devient très grande, rien ne change, et l'instrument, au stade de la détection, ne parvient jamais à saturation. On peut donc parler de dynamique de mesure infinie bien que l'indice de réfraction soit une grandeur finie.

Il a été constaté pour tous les détecteurs différentiels qui viennent d'être décrits, détecteurs comportant notamment une cuve de mesure et une cuve de référence, les mesures sont perturbées par les variations de pression dans les cuves.

Ces variations de pression sont dues au fait que les pompes utilisées pour faire circuler le liquide, ou phase mobile, dans les colonnes de chromatographie ne sont pas parfaites et certaines pompes délivrent des débits particulièrement pulsés et instables.

Or il est connu que l'indice de réfraction d'un fluide dépend de sa densité donc de sa pression.

De cette dépendance entre pression et indice de réfraction il résulte que ces détecteurs sont difficilement utilisables dès qu'il est nécessaire de travailler en haute sensibilité, quand les irrégularités de débits des pompes créent des signaux de détection qui deviennent supérieurs aux signaux recherchés.

Ainsi dans les réfractomètres différentiels connus, une variation de débit donc de pression affecte uniquement la cuve de mesure puisque dans la cuve de référence, le milieu n'est pas sollicité par l'extérieur. Cette variation, qui n'est donc nullement compensée par la cuve de référence, provoque un signal de mesure indésirable.

Les spectrophotomètres différentielles sont aussi concernés, de façon plus indirecte toutefois, par ce problème.

Le principe de fonctionnement des spectrophotomètres repose en effet sur l'absorption de la lumière ultraviolette par les produits à analyser. Or, les faisceaux de lumière traversant les cuves de référence et de mesure n'étant pas parfaitement parallèles, une partie de cette lumière se perd sur les parois de la cuve et cette perte varie avec les variations d'indice de réfraction du liquide.

Si la perturbation est moindre que dans le cas des réfractomètres différentiels elle reste cependant gênante notamment lorsque l'on travaille en haute sensibilité avec des pompes peu performantes.

La présente invention permet de remédier notamment à ce problème, en proposant un système capable de transmettre de façon instantanée une pression d'une première cuve vers une deuxième cuve. En d'autres termes il s'agit d'obtenir la même pression instantanée dans les deux cuves concernées.

La présente invention vise à fournir un système destiné à créer une même pression instantanée entre deux cuves chacune remplie d'un milieu donné, la première cuve comportant au moins un canal d'entrée et au moins un canal de sortie pour le milieu donné, la deuxième cuve comportant au moins un canal de sortie ; le système comportant en outre des moyens d'ouverture et de fermeture desdits canaux.

Conformément à l'invention, le système comprend au moins un capillaire de liaison entre chaque cuve, destiné notamment à transmettre instantanément une variation de pression de l'une des cuves vers l'autre cuve.

Plus précisément la première cuve est une cuve de mesure dans laquelle s'écoule la phase mobile à analyser et la deuxième cuve est une cuve contenant un milieu de référence maintenu à l'état statique pendant chaque mesure.

Selon un mode de réalisation de l'invention, le ou les capillaire(s) de liaison permettent de remplir la deuxième cuve.

Selon un autre mode de réalisation, la deuxième cuve comporte en outre au moins un canal d'entrée.

Le système selon l'invention peut être utilisé pour mesurer des indices de réfraction dans deux milieux différents.

Sans sortir du cadre de l'invention, le système peut aussi être utilisé pour mesurer l'absorption de lumière ultraviolette par les milieux présent dans les cuves.

Selon un autre de ses aspects, l'invention peut être utilisée pour mesurer l'absorption de la lumière visible par les milieux présents dans chaque cuve.

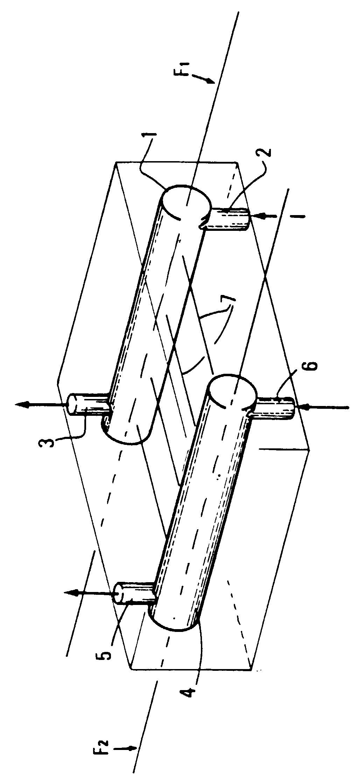

L'invention sera mieux comprise à la lecture de la description faite ci-après, à titre illustratif mais nullement limitatif, en référence à l'unique figure annexée.

Cette figure représente de façon schématique l'objet de la présente invention.

Une première cuve 1 dite cuve de mesure est traversée de part en part par un premier faisceau lumineux F1. Elle est équipée d'au moins un canal d'entrée 2 et d'au moins un canal de sortie 3 pour le milieu à analyser.

Une deuxième cuve 4, dite cuve de référence, est traversée par un deuxième faisceau lumineux F2. La cuve 4 comporte au moins un canal de sortie 5.

De façon préférentielle mais non obligatoire, la deuxième cuve 4 peut comporter au moins un canal d'entrée 6.

Bien entendu, sur chacun des canaux d'entrée 2 et de sortie 3, 5 sont prévus des moyens (non représentés) capables de les obturer ou non selon les phases du fonctionnement.

Si aucun canal n'est prévu pour l'alimentation de la deuxième cuve 4 alors un ou plusieurs canaux capillaires 7 reliant la première cuve 1 à la deuxième cuve 4 peuvent servir de canal d'alimentation (ou d'entrée) pour le milieu de référence.

L'inconvénient de cette solution réside dans le faible débit, donc dans la difficulté d'évacuer les bulles pendant l'opération de remplissage de la deuxième cuve 4.

Le ou les canaux capillaires 7 ont pour fonction, en dehors de la fonction d'alimentation décrite ci-avant, de transmettre la pression d'une cuve vers l'autre cuve, de façon instantanée.

Que l'invention soit utilisée pour des mesures d'indice de réfraction ou bien pour des mesures photométriques ou spectrophotométriques, le principe de fonctionnement reste sensiblement le même.

La cuve de référence 4 est remplie d'un milieu donné, via les capillaires 7 ou bien via un ou plusieurs canaux d'alimentation spécifiques 6. Le milieu qu'elle renferme est statique, en ce sens qu'il ne s'écoule pas dans la cuve 4 pendant la mesure proprement dite.

Dans la cuve de mesure 1 s'écoule le milieu à analyser. Une ou plusieurs pompes permettent d'amener le milieu jusque dans la cuve 1. Les cuves 1, 4 sont chacune traversées par un faisceau F1, F2 dont les perturbations donnent des indications sur la composition à analyser.

Or, comme il a été remarqué ci-avant, les "perturbations" des faisceaux ne doivent concerner que les paramètres (indice de réfraction, absorption de la lumière...) nécessaires à la détermination de la composition.

La qualité et la précision de la mesure en dépendent.

La présente invention, en proposant l'amélioration décrite ci-dessus, permet de s'affranchir de certains parasites de la mesure et en particulier des variations de pression dues aux pompes qui véhiculent le milieu dans la ou les cuves 1, 4, variations qui se répercutent jusque dans la cuve.

Le ou les capillaire(s) 7 selon l'invention permettent de résoudre ce problème d'une façon simple et fiable, sans aucun effet sur la précision de la mesure.

En particulier aucune perte de charge significative ne peut être créée par les capillaires 7 puisqu'ils ne génèrent presque aucun débit, en tout cas aucun débit susceptible de perturber la mesure.

En effet, compte tenu de la compressibilité des liquides en fonction de la pression qui est de l'ordre de 1.10⁻⁴ bar⁻¹, et comme les variations de pression (des pompes) sont couramment de l'ordre de quelques millibars, le débit dans les capillaires ne peut pas y créer de perte de charge significative.

Le diamètre du capillaire doit être aussi faible que possible ; ce sera un compromis entre les difficultés (techniques) de réalisation et les problèmes de diffusion des éluats de la cuve de mesure 1 vers la cuve de référence 4.

En outre il est possible, grâce aux différentes vannes prévues (mais non représentées) sur les canalisations d'entrée et de sortie de cuves, de réaliser au début de chaque cycle d'analyse une purge complète de la cuve de référence afin de la remplir d'une phase totalement pure et connue.

En chromatographie, il peut en effet se produire malgré le faible débit, dans les capillaires, des dérives lentes dues aux diffusions successives des éluats vers la cuve de référence 4.

## Revendications

1. Système destiné à créer une même pression instantanée entre deux cuves chacune remplie d'un milieu donné, la première cuve (1) comportant au moins un canal d'entrée (2) et au moins un canal de sortie (3) pour le milieu donné, la deuxième cuve (4) comportant au moins un canal de sortie (5), et des moyens d'ouverture et de fermeture desdits canaux, caractérisé en ce qu'il comprend au moins un capillaire de liaison (7) entre chaque cuve, destiné notamment à transmettre instantanément une variation de pression de la première cuve (1) vers la deuxième cuve (4).

2. Système selon la revendication 1, caractérisé en ce que la première cuve (1) est une cuve de mesure dans laquelle s'écoule la phase mobile à analyser et en ce que la deuxième cuve est une cuve contenant un milieu de référence maintenu à l'état statique pendant chaque mesure.

3. Système selon l'une quelconque des revendications précédentes, caractérisé en ce que le ou les capillaire(s) de liaison (7) permettent de remplir la deuxième cuve (4).

4. Système selon l'une quelconque des revendications 1 à 3, caractérisé en ce que la deuxième cuve (4) comporte en outre au moins un canal d'entrée (6).

5. Utilisation du système selon l'une quelconque des revendications précédentes pour mesurer des indices de réfraction dans deux milieux différents.

6. Utilisation selon la revendication 5, en chromatographie liquide à hautes performances.

7. Utilisation du système selon l'une quelconque des revendications 1 à 4, pour mesurer l'absorption de lumière ultraviolette par les milieux présents dans chaque cuve.

8. Utilisation du système selon l'une quelconque des revendications 1 à 4, pour mesurer l'absorption de la lumière visible par les milieux présents dans chaque cuve.

## Patentansprüche

1. System, das dazu bestimmt ist, ein und den gleichen Momentandruck zwischen zwei je mit einem gegebenen Medium gefüllten Küvetten zu erzeugen, wobei die erste Küvette (1) wenigstens einen Eintrittskanal (2) und wenigstens einen Austrittskanal (3) für das gegebene Medium umfaßt, die zweite Küvette (4) wenigstens einen Austrittskanal (5) umfaßt, und öffnungs- und Schließmittel für diese Kanäle, dadurch gekennzeichnet, daß es wenigstens eine Verbindungskapillare (7) zwischen jeder Küvette umfaßt, die insbesondere dazu bestimmt ist, momentan eine Druckveränderung von der ersten Küvette (1) zur zweiten Küvette (4) zu übertragen.

2. System nach Anspruch 1, dadurch gekennzeichnet, daß die erste Küvette (1) eine Meßküvette ist, in der die bewegliche zu analysierende Phase strömt, und daß die zweite Küvette eine ein Bezugsmedium enthaltende Küvette ist, die im statischen Zustand während jeder Messung gehalten wird.

3. System nach einem der vorherstehenden Ansprüche, dadurch gekennzeichnet, daß die Verbindungskapillare(n) (7) es ermöglichen, die zweite Küvette (4) zu füllen.

4. System nach einem der Ansprüche 1 bis 3, dadurch gekennzeichnet, daß die zweite Küvette (4) im übrigen wenigstens einen Eintrittskanal (6) umfaßt.

5. Verwendung des Systems nach einem der vorstehenden Ansprüche zum Messen der Brechungsindices in zwei unterschiedlichen Medien.

6. Verwendung nach Anspruch 5 in der flüssigen Hochleistungschromatographie.

7. Verwendung des Systems nach einem der Ansprüche 1 bis 4 zum Messen der Absorption des ultravioletten Lichtes durch die in jeder Küvette vorhandenen Medien.

8. Verwendung des Systems nach einem der Ansprüche 1 bis 4 zum Messen der Absorption des sichtbaren Lichtes durch die in jeder Küvette vorhandenen Medien.

## Claims

1. A system designed to create a same instantaneous pressure between two tanks, each filled with a given medium, the first tank (1) having at least one inlet passage (2) and at least one outlet passage (3) for the given medium, the second tank (4) having at least one outlet passage (5), and means for opening and closing said passages, characterised in that it has at least one linking capillary (7) between each tank, specifically designed to transmit instantaneously any variation in pressure from the first tank (1) to the second tank (4).

2. A system as claimed in claim 1, characterised in that the first tank (1) is a measurement tank in which the mobile phase to be analysed is circulated and the second tank is a tank containing a reference medium which is kept in a static state during each measurement.

3. A system as claimed in any one of the preceding claims, characterised in that the linking capillary or capillaries (7) can be used to fill the second tank (4).

4. A system as claimed in any one of claims 1 to 3, characterised in that the second tank (4) has at least one inlet passage (6) in addition.

5. Use of the system as claimed in any one of the preceding claims to measure refractive indices in two different media.

6. Use as claimed in claim 5 for the purposes of (high-performance liquid) chromatography.

7. Use of the system as claimed in any one of claims 1 to 4 for measuring the absorption of ultraviolet light by the media present in each tank.

8. Use of the system as claimed in any one of claims 1 to 4 to measure the absorption of visible light by the media present in each tank.
